# EUROPÄISCHE PATENTANMELDUNG

(11) **EP 0 820 896 A2**
(43) Veröffentlichungstag der Anmeldung: **28.01.1998**
(21) Anmeldenummer: 97112796.4
(22) Anmeldetag: 25.07.1997
(51) Int. Cl.: B60N 2/16

(54) **Fahrzeugsitz, insbesondere für Wohnmobile**

(30) Priorität: 25.07.1996 DE 19630137
(71) Anmelder: AGUTI PRODUKTENTWICKLUNG & DESIGN GMBH, 88079 Kressbronn (DE)
(72) Erfinder: Grieger, Andreas, D-88079 Kressbronn (DE)
(74) Vertreter: Fiener, Josef

(57) **Zusammenfassung**

Zur vereinfachten Bauweise bei hoher Sicherheit und sehr großem Verstellbereich eines Fahrzeugsitzes (1), insbesondere für Wohnmobile, mit wenigstens einer Sitzlehne (2) und einer höhenverstellbaren Sitzfläche (3) wird vorgeschlagen, daß die Sitzfläche (3) des Fahrzeugsitzes (1) auf einem linear höhenverschiebbaren Hubschlitten (4) angeordnet ist, wobei am Hubschlitten (4) wenigstens ein Sicherheitsgurt-Anlenkpunkt (8, 9) angeordnet ist. Dieser Hubschlitten (4) weist bevorzugt zwei in Vertikalrichtung voneinander beabstandete Führungselemente (5) auf. Hierdurch ergibt sich ein großer Verstellbereich des Fahrzeugsitzes (1) vom Fahrzeugboden (11) bis hin zum Fahrzeugdachbereich (12).

## Beschreibung

Die Erfindung betrifft einen Fahrzeugsitz, insbesondere für Wohnmobile, mit wenigstens einer Sitzfläche und einer höhenverstellbaren Sitzfläche.

Derartige höhenverstellbare Fahrzeugsitze werden sowohl in Personenfahrzeugen als auch in Nutzfahrzeugen eingesetzt. Bei der Anwendung im PKW-Bereich ist hierbei die Sitzfläche nur im geringen Umfang von einigen Zentimetern verstellbar, um hierbei Größenunterschiede auszugleichen. Diese Höhenverstellung des Fahrersitzes im Zentimeterbereich wird zunehmend durch höhenverstellbare Lenkräder ergänzt.

Im Wohnmobilbereich ist die Situation jedoch etwas anders gelagert, da zum einen bei den Trägerfahrzeugen häufig noch keine höhenverstellbaren Lenkräder eingebaut sind. Andererseits werden die Fahrzeugsitze, insbesondere der Fahrersitz und die Beifahrersitze, als Drehsitz ausgebildet, so daß nach Verdrehung um 180° um die Hochachse z. B. der Fahrersitz zugleich als Sitzgelegenheit für einen Tisch im rückwärtigen Bereich des Wohnmobils dienen kann. Hierzu ist jedoch im Gegensatz zum PKW-Bereich eine Verstellvorrichtung erforderlich, die einen Verstellweg von ca. 10 cm bis 20 cm oder mehr ermöglicht. Dies gilt insbesondere bei den zunehmend verwendeten Niederflurrahmen, wobei der rückwärtige Teil des Wohnmobils (Wohnbereich) nach dem Fahrerhaus zur Vergrößerung der Stehhöhe abgesenkt ist. Hierbei muß dann jedoch die Verstellvorrichtung für die höhenverstellbare Sitzfläche bzw. den Fahrzeugsitz noch einen größeren Verstellweg aufweisen.

So sind als Verstellvorrichtung bereits Scherengestänge oder Doppelscherengestänge bekannt, z. B. aus der DE 295 14 230 U1, wobei mehrere schwenkbare Hebel mittels einer horizontalen Spindel im wesentlichen parallelogrammartig zusammengeschoben werden. Da jedoch die Sitzfläche im wesentlichen nur eine Länge von ca. 40 cm aufweist, ist auch die Länge dieser Scherenhebel begrenzt, da die Verstellvorrichtung unter der Sitzfläche Platz finden soll. Hierdurch wird jedoch andererseits wiederum der maximale Verstellweg begrenzt. Darüberhinaus weist diese Verstellvorrichtung einen sehr hohen Bauaufwand auf, da wenigstens vier Schwenkgelenke, im allgemeinen acht oder noch mehr derartiger Schwenkgelenke, erforderlich sind. Darüberhinaus wird insbesondere in der maximalen Verstellposition die Verstellvorrichtung relativ labil, so daß bei einem Unfall mit einer Deformation oder erheblichen Verletzungen gerechnet werden muß, insbesondere wenn der Sicherheitsgurt infolge der Verstellbewegung ungünstig verläuft.

Demzufolge liegt der Erfindung die Aufgabe zugrunde, einen Fahrzeugsitz zu schaffen, der bei einfacher Bauweise und hoher Stabilität einen vergrößerten Höhenverstellungsbereich und eine hohe Personensicherheit ermöglicht.

Diese Aufgabe wird gelöst durch einen Fahrzeugsitz mit den Merkmalen des Patentanspruches 1.

Durch die Anordnung der Sitzfläche auf einem linear höhenverschiebbaren Hubschlitten sind keine Begrenzungen des Verstellweges in der Vertikalrichtung mehr gegeben. Somit ist ein Verstellweg von 50 cm oder 100 cm oder noch mehr möglich. So ist es auch denkbar, daß der gesamte Fahrzeugsitz vom Boden des Fahrzeuges bis zum Dachbereich hochgehoben wird und dort beispielsweise durch Umklappen eine Bettfläche unterhalb des aufgesetzten Hochdaches (Alkoven) gebildet wird.

Zudem ist dieses Konzept des linear höhenverschiebbaren Hubschlittens sowohl auf Einzelsitze als auch auf Sitzbänke anwendbar, wobei auch die Teil-Sitzflächen der Sitzbank unabhängig voneinander höhenverstellbar sind, so daß hierdurch eine optimale Anpassung an die jeweils mitfahrenden Personen gegeben ist. Damit ist auch eine wesentliche Voraussetzung für eine hohe Unfallsicherheit gegeben, zumal die Stabilität des Fahrzeugsitzes von der Höhenposition im wesentlichen unabhängig ist. Insbesondere kann durch die Anordnung der Gurtverankerungs- bzw. Gurtanlenkpunkte an dem Hubschlitten der Verlauf der Becken- und Schultergurte des Sicherheitssystems konstant gehalten werden.

In bevorzugter Ausführung sind die Führungselemente für den Hubschlitten zur Ermöglichung der linearen Höhenverschiebung in einer Führungsschiene eingesetzt bzw. umgreifen diese. Hierdurch wird eine leichtgängige Verstellbewegung erreicht. Zudem ist eine großflächige Abstützung und Krafteinleitung gegeben, so daß ein Ausreißen der Führungselemente aus der Führungsschiene selbst bei einem Unfall nicht zu befürchten ist. Insbesondere können hierbei die Führungselemente beispielsweise entsprechend der Höhe der Sitzlehne voneinander beabstandet sein, so daß eine optimale Krafteinleitung mit großer Abstützbasis gegeben ist. Zudem kann hierbei die Gurtanlenkung direkt an dem vertikalen Teilholm des Hubschlittens angeordnet sein, so daß die Anlenkpunkte im wesentlichen eine gleichbleibende Position zur Sitzfläche aufweisen.

Obwohl die Führung in zwei seitlichen Führungsschienen vom Festigkeitsaspekt her günstig ist, reicht es aus, wenn der Hubschlitten seitlich an einer Führungsschiene angreift. Hierbei ist es auch möglich, die Führungsschiene mittig an der Rückseite einer Sitzbank oder eines Einzelsitzes anzuordnen, wodurch sich eine symmetrische Krafteinleitung ergibt. Zudem kann die Führungsschiene zugleich als Verankerungssäule für das Sicherheitsgurtsystem ausgebildet sein. Die Führungsschiene kann zudem auch schwenkbar in einem Drehsockel am Fahrzeugboden gelagert sein, so daß sich eine Drehung der gesamten Sitzbank bzw. des Einzelsitzes ergibt. Ebenso kann am Hubschlitten selbst eine Drehlagerung, z. B. ein zur Sitzfläche mittiger Drehzapfen, vorgesehen sein, an dem dann die Sitzfläche zusammen mit der Sitzlehne um die Hochachse verdreht werden kann. Ebenso können an dem Hubschlitten übliche Verstellelemente für die Neigungsverstellung und/oder Längsverstellung vorgesehen sein.

Weitere vorteilhafte Ausgestaltungen sind Gegenstand der Unteransprüche. Nachfolgend werden hierbei mehrere Ausführungsbeispiele anhand der Zeichnungen näher erläutert und beschrieben. Hierbei zeigen:
- Fig. 1: eine schematische Darstellung von Fahrzeugsitzen in Einbauposition in einem Wohnmobil;
- Fig. 2: eine Draufsicht gemäß Pfeil A in Fig. 1; und
- Fig. 3: eine Schnittdarstellung in Draufsicht gemäß den Pfeilen B - B in Fig. 1.

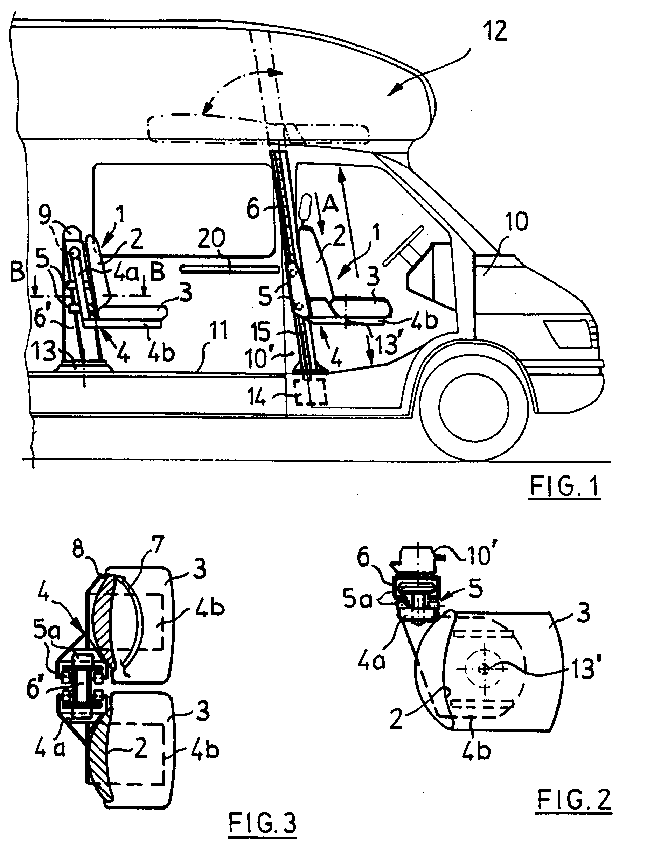

In Fig. 1 ist ein Fahrzeug 10 mit seinem Frontbereich in der Ausführung als Wohnmobil schematisch dargestellt. In Fahrerposition ist ein Fahrzeugsitz 1 mit einer Sitzlehne 2 und einer Sitzfläche 3 angeordnet. Die Sitzfläche 3 und die Sitzlehne 2 sind auf einem Hubschlitten 4 angeordnet, der mittels rollenartiger Führungselemente 5 entlang einer Führungsschiene 6 höhenverstellbar ist. Die Führungselemente 5 sind bevorzugt als Laufrollen 5a ausgebildet, die in die Führungsschiene 6 eingepaßt sind. Die Führungselemente 5 sind hierbei vertikal voneinander beabstandet, bevorzugt um die Höhe der Sitzlänge 2, so daß hierdurch eine sehr hohe Führungslänge und damit Stabilität des Fahrzeugsitzes 1 erreicht wird. Die Führungsschiene 6 (vgl. auch Fig. 2) ist hierbei als Hutprofil ausgebildet, das im wesentlichen entlang der B-Säule 10' des Fahrzeuges 10 verläuft.

Die Führungsschiene 6 kann hierbei als Nachrüstteil an der B-Säule 10' angeordnet sein, wobei diese Führungsschiene 6 auch gegenüber der Vertikalen leicht geneigt sein kann. Dies hat zudem den Vorteil, daß in der hier gezeigten, relativ weit abgesenkten Position für kleinere Personen der Fahrer näher zum Lenkrad hin sitzt, während eine größere Person mit angehobenem Fahrzeugsitz 1 entsprechend den ergonomischen Anforderungen weiter vom Lenkrad weg sitzt. Die Führungsschiene 6 kann hierbei an ihrer Flachseite mit der B-Säule 10' verschraubt oder auf sonstige Weise befestigt sein. Zudem kann die Führungsschiene 6 mit einem bodenseitigen Sockel 13 am Fahrzeugboden 11 befestigt sein. In diesem Sockel 13 kann zudem ein Hubantrieb 14 angeordnet sein, so daß über einer Spindel, biegsame Welle, Pneumatikantrieb oder dgl. der Fahrzeugsitz 1 höhenverstellbar ist. Die jeweilige Höhenposition kann hierbei auch durch Eingriff in feingliedrige Rasterungen oder ähnliche Verriegelungselemente, wie sie aus Sitzlängsverstellungen bekannt sind, jeweils stufenweise fest eingestellt sein.

Ein solcher Hubantrieb 14 ist bevorzugt bei sehr großem Verstellbereich des Hubschlittens 4 vorteilhaft. So kann beispielsweise bei einer Verlängerung der seitlichen Führungsschiene 6 bis in den Fahrzeugdachbereich 12 hinauf, auch der Fahrzeugsitz 1 bis in diese Höhe hochgehoben werden, wie dies strichpunktiert angedeutet ist, so daß nach Umklappen der Sitzlehne 2 eine Liegefläche ausgebildet wird. Dies hat den Vorteil, daß in Normalposition die Stehhöhe im Fahrerhaus sehr hoch ist, so daß sich ein verbessertes Raumgefühl ergibt. Andererseits kann hierdurch die Raumausnutzung verbessert werden bzw. bei gleichbleibendem Platzangebot das Wohnmobil niedriger gebaut werden. Zudem ergibt sich der Vorteil, daß für die Nutzung des Alkovens die Person nicht mehr eine Leiter hochsteigen muß, sondern durch den höhenverschiebbaren Fahrzeugsitz 1 mittels des Hubschlittens 4 von der Sitzposition in die Liegeposition hochgehoben werden kann. Um bei dieser Hochfahrbewegung bzw. Absenkbewegung mittels des Hubantriebes 14 Verletzungen zu vermeiden, ist die Führungsschiene 6 mit einer Abdeckung 15, bevorzugt einer Teleskopabdeckung, versehen.

Im rückwärtigen Bereich hinter dem Fahrersitz ist zudem die Ausführung des Fahrzeugsitzes 1 als Sitzbank dargestellt. Hierbei ist die Führungsschiene 6 in Form einer aufrechtstehenden, ca. 1 m hohen Säule 6' dargestellt. Diese Säule 6' ist hierbei mit dem Fahrzeugrahmen über einen Drehsockel 13 verbunden, so daß die gesamte Sitzbank bzw. der Fahrzeugsitz 1 auch um die Hochachse gedreht werden kann. Die Säule 6' kann jedoch auch mit einem einfachen Flansch am Boden bzw. Fahrzeugrahmen befestigt sein. Wesentlich ist dabei die Anordnung des Hubschlittens 4 (vgl. auch Fig. 3), wobei die Führungselemente 5 des Hubschlittens 4 in dieser Ausführung abstehende Stege der Säule 6' mittels Laufrollen 5a umgreifen. Hierdurch ist eine Höhenverstellung der Sitzfläche 3 auf einfache Weise möglich, insbesondere wiederum mit einem Hubantrieb 14, der innerhalb der Säule 6' angeordnet ist. Weiterhin sind an dem Hubschlitten 4 im seitlichen Bereich Verankerungspunkte 8 für einen Sicherheitsgurt 7 vorgesehen. Der obere Sicherheitsgurt-Anlenkpunkt 9 kann dabei an dem oberen Bereich der Säule 6' angeordnet sein, jedoch auch am oberen Bereich des aufrechten Holms des Hubschlittens 4, der auch die voneinander beabstandeten Führungselemente 5 trägt. Die Führungselemente 5 können auch gestreckt sein, z. B. Gleitschienen mit reibungsarmen Kunststoffschichten.

In Fig. 2 ist eine Draufsicht auf den Fahrzeugsitz 1 gemäß dem Pfeil A in Fig. 1 dargestellt. Hieraus ist die konsolenartige Gestaltung des Hubschlittens 4 mit einem aufrechten Holm 4a zur Befestigung der Führungselemente 5 und einem horizontal auskragenden Plattenbereich ersichtlich, wobei auf dem horizontalen Plattenbereich 4b des Hubschlittens 4 die Sitzfläche 3 angeordnet ist. Diese Anordnung kann hierbei unter Zwischenschaltung einer strichliert angedeuteten Längsverstellung oder einer Drehlagerung 13' erfolgen, so daß die Sitzfläche 3 zusammen mit der Sitzlehne 2 um die Hochachse bezüglich den Hubschlitten 4 gedreht werden kann. Somit sitzt dann der Fahrer im wesentlichen der im rückwärtigen Bereich gezeigten Sitzbank gegenüber, beispielsweise um an einem Tisch 20 Platz zu nehmen. Wie ersichtlich, ist hierbei die Höhenpositionierung durch lineare Höhenverschiebung des Hubschlittens 4 über einen weiteren Bereich möglich.

In Fig. 3 ist ein Querschnitt entlang der Linie B - B in Fig. 1 dargestellt. Hieraus ist der Umgriff der Laufrollen 5a als Führungselemente 5 um die Führungsschienen der Säule 6' ersichtlich. Es sei darauf hingewiesen, daß hierbei die beiden Sitzflächen 3 der so gebildeten Sitzbank unabhängig voneinander verstellt werden können. Bei einer um 90° verdrehten Anordnung der Säule 6' kann die Sitzfläche 3 für beide Sitzpositionen der Sitzbank jedoch auch gemeinsam verstellt werden, wobei sich eine weitere Vereinfachung des Bauaufwandes ergibt, da nur ein Hubschlitten 4 für beide Sitzplätze erforderlich ist.

Der Hubschlitten 4 ist insbesondere als Schweißkonstruktion mit Eckverstrebungen zwischen den Teilen 4a und 4b ausgebildet, kann jedoch auch als Gußkonstruktion oder Stanzteil ausgeführt sein. Für die Führungsschiene 6 bzw. Säule 6' wird bevorzugt eine Schweiß- oder Strangpreßkonstruktion gewählt, um die aus Fig. 2 bzw. 3 ersichtliche Querschnittsform zu erhalten. Hierbei ist jedoch auch ein schwalbenschwanzförmiges Führungsprofil für den Holm 4a des Hubschlittens 4 möglich.

## Patentansprüche

1. Fahrzeugsitz, insbesondere für Wohnmobile, mit wenigstens einer Sitzlehne (2) und einer höhenverstellbaren Sitzfläche (3),
dadurch gekennzeichnet, daß
die Sitzfläche (3) auf einem linear höhenverschiebbaren Hubschlitten (4) angeordnet ist, an dem wenigstens ein Sicherheitsgurt-Verankerungspunkt (8 und/oder 9) angeordnet ist.

2. Fahrzeugsitz nach Anspruch 1,
dadurch gekennzeichnet, daß
der Hubschlitten (4) wenigstens zwei in Vertikalrichtung voneinander beabstandete Führungselemente (5) aufweist.

3. Fahrzeugsitz nach Anspruch 2,
dadurch gekennzeichnet, daß
die Führungselemente (5) in eine Führungsschiene (6) eingreifend oder diese umgreifend angeordnet sind.

4. Fahrzeugsitz nach Anspruch 3,
dadurch gekennzeichnet, daß
die Führungsschiene (6) entlang einer Karosseriesäule, insbesondere der B-Säule (10') eines Fahrzeuges (10), angeordnet ist.

5. Fahrzeugsitz nach Anspruch 3,
dadurch gekennzeichnet, daß
die Führungsschiene (6) als im wesentlichen freistehende, bodenseitig verankerte Säule (6') ausgebildet ist.

6. Fahrzeugsitz nach Anspruch 5,
dadurch gekennzeichnet, daß
die Säule (6') als Verankerung für wenigstens einen Sicherheitsgurt (7) ausgebildet ist.

7. Fahrzeugsitz nach einem der Ansprüche 3 bis 6,
dadurch gekennzeichnet, daß
pro Fahrzeugsitz (1) eine einzige Führungsschiene (6) vorgesehen ist.

8. Fahrzeugsitz nach einem der Ansprüche 1 bis 7,
dadurch gekennzeichnet, daß
der Hubschlitten (4) bis auf den Fahrzeugboden (11) absenkbar ist.

9. Fahrzeugsitz nach einem der Ansprüche 1 bis 8,
dadurch gekennzeichnet, daß
der Hubschlitten (4) bis zum Fahrzeugdachbereich (12) hochfahrbar ist, wobei der Hubschlitten (4) mit einem Hubantrieb (14) verbunden ist.

10. Fahrzeugsitz nach einem der Ansprüche 1 bis 9,
gekennzeichnet durch die Ausbildung des Fahrzeugsitzes (1) als Sitzbank mit zwei Hubschlitten (4), wobei die beiden Hubschlitten (4) bevorzugt unabhängig voneinander höhenverstellbar sind.
